# EUROPEAN PATENT APPLICATION

(11) **EP 3 043 603 A1**
(43) Date of publication of application: **13.07.2016**
(21) Application number: 13894119.0
(22) Date of filing: 30.09.2013
(51) Int. Cl.: H04W 52/02

(54) **DOWNLINK CONTROL METHOD AND APPARATUS**

(71) Applicant: Huawei Technologies Co., Ltd., Longgang District Shenzhen, Guangdong 518129 (CN)
(72) Inventor: LIU, Qi, Shenzhen Guangdong 518129 (CN); WANG, Xiaoxia, Shenzhen Guangdong 518129 (CN); HUANG, Xin, Shenzhen Guangdong 518129 (CN)
(74) Representative: Pfenning, Meinig & Partner mbB
(86) International application number: PCT/CN2013/084726
(87) International publication number: WO 2015/042958

(57) **Abstract**

The present invention discloses a downlink control method and apparatus. The downlink control method includes: determining, according to at least one downlink control condition, that a first cell is a cell under downlink control, where an active set of user equipment includes at least two cells, and the first cell is in the active set of the user equipment; and controlling the first cell to decrease a transmit power at which downlink control information is sent to the user equipment, or controlling the first cell to stop sending the downlink control information to the user equipment. According to the downlink control method provided by the embodiments of the present invention, it is determined, in an active set and according to at least one downlink control condition, that a first cell is a cell under downlink control, and the first cell is controlled to decrease a transmit power at which downlink control information is sent to user equipment, or the first cell is controlled to stop sending the downlink control information to the user equipment, thereby reducing downlink power resources occupied by the user equipment and improving utilization efficiency of downlink power resources.

## Description

### TECHNICAL FIELD

The present invention relates to the field of communications technologies, and in particular, to a downlink control method and apparatus.

### BACKGROUND

In a Universal Mobile Telecommunications System (Universal Mobile Telecommunications System, UMTS) network, after user equipment (User Equipment, UE) establishes a connection to a network side, the UE needs to frequently exchange control information, such as a pilot (pilot), a transmit power control command (transmit power command, TPC), or a transport format combination indicator (transport formation combination indicator, TFCI) with the network side. When the user equipment moves from one cell (cell) to another cell, the user equipment may simultaneously establish connections to multiple cells and exchange the above-mentioned control information, in order to ensure service continuity. In addition, on the network side, multiple cells need to serve the user equipment at the same time.

In addition, for user equipment in a soft handover and softer handover (soft handover and softer handover, SHO) state, the network side and the user equipment side jointly maintain an active set, where the active set includes identification (Identification, ID) information of multiple cells. Each cell indicated in the active set needs to establish a connection to the user equipment, and in every slot (slot), needs to exchange control information with the user equipment by using a dedicated physical channel (Dedicated Physical Channel, DPCH)/fractional dedicated physical channel (Fractional Dedicated Physical Channel, F-DPCH). A transmit power of a downlink DPCH/F-DPCH is controlled by an uplink TPC command that is sent by the user equipment to the network side. If the uplink TPC command requires increasing the transmit power of the downlink DPCH/F-DPCH, the network side increases the transmit power of the downlink DPCH/F-DPCH, and vice versa. A transmit power of a downlink DPCH/F-DPCH of each cell in an active set in the SHO state is controlled by the uplink TPC command. When a large quantity of user equipments are online, the downlink DPCH/F-DPCH consumes a large amount of downlink power resources of the network side. Because user equipment in the SHO state needs to consume downlink DPCH/F-DPCH power resources that are N times those consumed by user equipment in another state, where N is equal to a quantity of cells in an active set of the user equipment, high consumption of downlink power resources of the network side is caused, which increases the burden of the network side, and greatly affects network services and stability.

In an existing network, when a large quantity of user equipments are online, downlink power resources fall considerably short. Moreover, a large portion, for example, 40% of the online user equipments may be in the SHO state, and because a transmit power of a downlink DPCH/F-DPCH that is used by user equipment in the SHO state is far greater than that of user equipment in another state, downlink power resources of the entire network are greatly wasted.

### SUMMARY

### Technical problem

In view of this, a technical problem to be resolved by the present invention is that UE in an SHO state causes waste of network downlink power resources.

### Solution

To resolve the foregoing technical problem, according to a first aspect, the present invention provides a downlink control method, including:
determining, according to at least one downlink control condition, that a first cell is a cell under downlink control, where an active set of user equipment includes at least two cells, and the first cell is in the active set of the user equipment; and
controlling the first cell to decrease a transmit power at which downlink control information is sent to the user equipment, or
controlling the first cell to stop sending the downlink control information to the user equipment.

With reference to the first aspect, in a first possible implementation manner, the controlling the first cell to decrease a transmit power at which downlink control information is sent to the user equipment includes:
controlling, in a first time period of each control cycle, the first cell to decrease the transmit power at which the downlink control information is sent to the user equipment, where duration of the first time period is less than or equal to duration of the control cycle.

With reference to the first aspect, in a second possible implementation manner, the controlling the first cell to stop sending the downlink control information to the user equipment includes:
controlling, in a first time period of each control cycle, the first cell to stop sending the downlink control information to the user equipment, where duration of the first time period is less than or equal to duration of the control cycle.

With reference to the first aspect or the first possible implementation manner or the second possible implementation manner of the first aspect, in a third possible implementation manner, the downlink control method further includes:
when a first cycle is reached, determining, according to the at least one downlink control condition, that a second cell is the cell under downlink control;
controlling the second cell to decrease the transmit power at which the downlink control information is sent to the user equipment, or
controlling the second cell to stop sending the downlink control information to the user equipment; and
controlling the first cell to restore the transmit power at which the downlink control information is sent to the user equipment, or
controlling the first cell to resume sending the downlink control information to the user equipment.

With reference to the first aspect or any implementation manner of the first possible implementation manner to the third possible implementation manner of the first aspect, in a fourth possible implementation manner, the downlink control method further includes:
if the first cell sends data to the user equipment, controlling the first cell to restore the transmit power at which the downlink control information is sent to the user equipment; or
if the first cell sends data to the user equipment, controlling the first cell to resume sending the downlink control information to the user equipment.

With reference to the first aspect or any implementation manner of the first possible implementation manner to the fourth possible implementation manner of the first aspect, in a fifth possible implementation manner, the determining, according to at least one downlink control condition, that a first cell is a cell under downlink control includes: if at least one cell existing in the active set of the user equipment is not the cell under downlink control, and the first cell satisfies the following at least one downlink control condition, determining that the first cell is the cell under downlink control, where
the downlink control condition includes:
an available power resource of the first cell is less than or equal to a set power threshold; or
load of the first cell is greater than or equal to a set load threshold; or
a channel signal-to-noise ratio of the user equipment in the first cell is less than or equal to a set signal-to-noise ratio threshold; or
power consumption of the first cell is greater than or equal to a set power consumption threshold; or
a quantity of user equipments in connected mode in the first cell is greater than or equal to a set user-equipment-quantity threshold; or
a priority of the user equipment in the first cell is lower than or equal to a set priority threshold; or
an average path loss of the user equipment in the first cell is greater than or equal to a set average path loss threshold; or
a downlink single-link transmit power of the user equipment in the first cell is greater than or equal to a set downlink single-link transmit power threshold.

According to a second aspect, the present invention provides a downlink control method, including:
receiving downlink control information that is sent by a first cell at a decreased transmit power, where the first cell is a cell that is determined in an active set of user equipment by a radio network controller according to a downlink control condition, and the user equipment is within coverage of the first cell.

With reference to the second aspect, in a first possible implementation manner, the downlink control method further includes:
receiving data that is sent by the first cell at a normal transmit power, where the normal transmit power is a transmit power that is restored by the first cell under control of the radio network controller when the first cell needs to send the data to the user equipment.

According to a third aspect, the present invention provides a downlink control apparatus, including:
a determining unit, configured to determine, according to at least one downlink control condition, that a first cell is a cell under downlink control, where an active set of user equipment includes at least two cells, and the first cell is in the active set of the user equipment; and
a control unit, connected to the determining unit, and configured to control the first cell to decrease a transmit power at which downlink control information is sent to the user equipment, or control the first cell to stop sending the downlink control information to the user equipment.

With reference to the third aspect, in a first possible implementation manner, the control unit is further configured to control, in a first time period of each control cycle, the first cell to decrease the transmit power at which the downlink control information is sent to the user equipment, where duration of the first time period is less than or equal to duration of the control cycle.

With reference to the third aspect, in a second possible implementation manner, the control unit is further configured to control, in a first time period of each control cycle, the first cell to stop sending the downlink control information to the user equipment, where duration of the first time period is less than or equal to duration of the control cycle.

With reference to the third aspect or the first possible implementation manner or the second possible implementation manner of the third aspect, in a third possible implementation manner,
the determining unit is further configured to: when a first cycle is reached, determine, according to the at least one downlink control condition, that a second cell is the cell under downlink control;
the control unit is further configured to control the second cell to decrease the transmit power at which the downlink control information is sent to the user equipment, or control the second cell to stop sending the downlink control information to the user equipment; and
the control unit is further configured to control the first cell to restore the transmit power at which the downlink control information is sent to the user equipment, or control the first cell to resume sending the downlink control information to the user equipment.

With reference to the third aspect or any implementation manner of the first possible implementation manner to the third possible implementation manner of the third aspect, in a fourth possible implementation manner, the control unit is further configured to:
if the first cell sends data to the user equipment, control the first cell to restore the transmit power at which the downlink control information is sent to the user equipment; or
if the first cell sends data to the user equipment, control the first cell to resume sending the downlink control information to the user equipment.

With reference to the third aspect or any implementation manner of the first possible implementation manner to the fourth possible implementation manner of the third aspect, in a fifth possible implementation manner, the determining unit is further configured to: if there is at least one cell, in the active set of the user equipment, that is not the cell under downlink control, and the first cell satisfies the following at least one downlink control condition, determine that the first cell is the cell under downlink control, where
the downlink control condition includes:
an available power resource of the first cell is less than or equal to a set power threshold; or
load of the first cell is greater than or equal to a set load threshold; or
a channel signal-to-noise ratio of the user equipment in the first cell is less than or equal to a set signal-to-noise ratio threshold; or
power consumption of the first cell is greater than or equal to a set power consumption threshold; or
a quantity of user equipments in connected mode in the first cell is greater than or equal to a set user-equipment-quantity threshold; or
a priority of the user equipment in the first cell is lower than or equal to a set priority threshold; or
an average path loss of the user equipment in the first cell is greater than or equal to a set average path loss threshold; or
a downlink single-link transmit power of the user equipment in the first cell is greater than or equal to a set downlink single-link transmit power threshold.

According to a fourth aspect, the present invention provides a downlink control apparatus, including:
a receiving unit, configured to receive downlink control information that is sent by a first cell at a decreased transmit power, where the first cell is a cell that is determined in an active set of the apparatus by a radio network controller according to a downlink control condition, and the apparatus is within coverage of the first cell.

With reference to the fourth aspect, in a first possible implementation manner, the receiving unit is further configured to receive data that is sent by the first cell at a normal transmit power, where the normal transmit power is a transmit power that is restored by the first cell under control of the radio network controller when the first cell needs to send the data to the apparatus.

### Beneficial effects

According to the downlink control method of the embodiments, it is determined, in an active set and according to at least one downlink control condition, that a first cell is a cell under downlink control, and the first cell is controlled to decrease a transmit power at which downlink control information is sent to user equipment, or the first cell is controlled to stop sending the downlink control information to the user equipment, thereby reducing downlink power resources occupied by the user equipment and improving utilization efficiency of downlink power resources.

Exemplary embodiments are described in detail below with reference to the accompanying drawings, and other features and aspects of the present invention will become apparent.

### BRIEF DESCRIPTION OF DRAWINGS

The accompanying drawings that are included in this specification and constitute a part of this specification, together with this specification, illustrate exemplary embodiments, features and aspects of the present invention, and are used to explain the principles of the present invention.
FIG. 1a is a flowchart of a downlink control method according to Embodiment 1 of the present invention;
FIG. 1b is a schematic diagram of connections between user equipment in an SHO state and cells according to Embodiment 1 of the present invention;
FIG. 1c is a schematic diagram of downlink control when user equipment is in an SHO state in the downlink control method according to Embodiment 1 of the present invention;
FIG. 2 is a flowchart of a downlink control method according to Embodiment 2 of the present invention;
FIG. 3 is a flowchart of a downlink control method according to Embodiment 3 of the present invention;
FIG. 4 is a structural block diagram of a downlink control method according to Embodiment 4 of the present invention;
FIG. 5 is a structural block diagram of a downlink control apparatus according to Embodiment 5 of the present invention;
FIG. 6 is a structural block diagram of a downlink control apparatus according to Embodiment 6 of the present invention;
FIG. 7 is a structural block diagram of a downlink control apparatus according to Embodiment 7 of the present invention;
FIG. 8 is a structural block diagram of a downlink control apparatus according to Embodiment 8 of the present invention; and
FIG. 9 is a structural block diagram of a downlink control apparatus according to Embodiment 9 of the present invention.

### DESCRIPTION OF EMBODIMENTS

The following describes various exemplary embodiments, features, and aspects of the present invention in detail with reference accompanying drawings. Same reference numerals in the accompanying drawings designate elements that have same or similar functions. Various aspects of the embodiments illustrated in the accompanying drawings may not be necessarily drawn to scale, unless otherwise specified.

The specific term "exemplary" herein means "used as an example or embodiment or illustrative". Any embodiment described as "exemplary" herein is not necessarily explained as being superior or better than other embodiments.

In addition, to better describe the present invention, numerous specific details are provided in the following specific implementation manners. A person skilled in the art should understand that the present invention may also be implemented without these specific details. In some other embodiments, well-known methods, means, components, and circuits are not described in detail, so as to highlight the major idea of the present invention.

Implementation processes of the foregoing downlink control method are described in detail below by using specific embodiments as examples.

### Embodiment 1

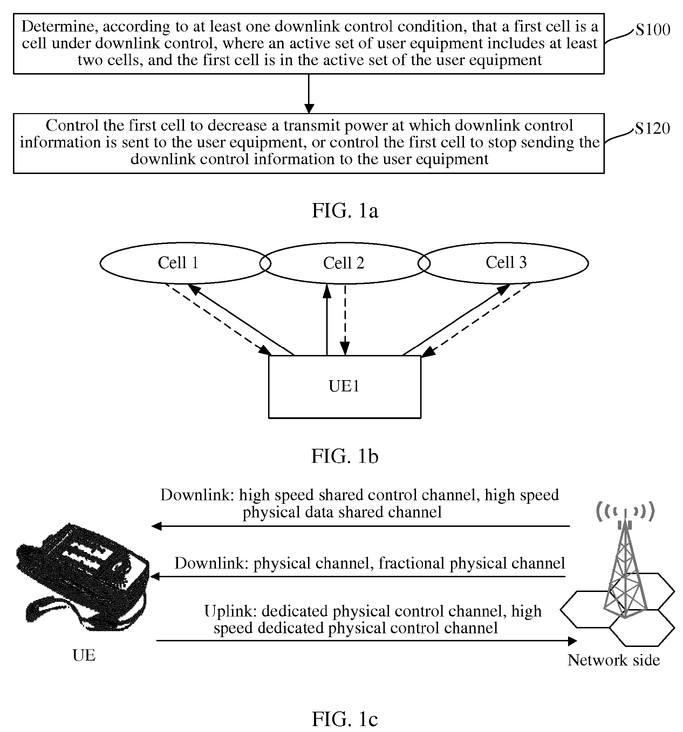

FIG. 1a is a flowchart of a downlink control method according to Embodiment 1 of the present invention. The method is applicable to a scenario in which multiple cells of a network side serve one user equipment at the same time and the multiple cells needs to separately consume downlink power resources for the user equipment, so as to reduce downlink power resources occupied by the user equipment and improve utilization efficiency of downlink power resources. As shown in FIG. 1a, the downlink control method may include:
Step S100: Determine, according to at least one downlink control condition, that a first cell is a cell under downlink control, where an active set of user equipment includes at least two cells, and the first cell is in the active set of the user equipment.

Specifically, user equipment (UE), such as a mobile phone, a smartphone (smartphone in English), a computer, or an in-vehicle mobile apparatus, can maintain an online connection to a network side such as a radio network controller (Radio Network Controller in English, RNC for short). In a same time period, a large quantity of UEs may maintain an online connection to a network side at the same time. When UE is in an SHO state, in a process of handing over the UE from one cell to another cell, the network side always communicates with the UE by using at least one cell; therefore, the network side needs to control multiple cells to serve one UE at the same time, and send control information to the UE. Multiple cells simultaneously connected to one UE belong to a same active set, that is, an active set includes at least two cells connected to the UE. In addition, cells included in an active set of UE may change with time and different signals. FIG. 1b is a schematic diagram of connections between user equipment in an SHO state and cells according to Embodiment 1 of the present invention. As shown in FIG. 1b, cell 1, cell 2 and cell 3 are cells connected to UE 1; accordingly, an active set of UE 1 may include cell 1, cell 2 and cell 3, and the active set may be stored in the network side, for example, in an RNC.

To reduce downlink power resources occupied by user equipment, at least one cell under downlink control may be determined in an active set of the user equipment according to at least one downlink control condition, and therefore, a transmit power of a downlink DPCH/F-DPCH in the cell under downlink control may be adjusted. The cell under downlink control may receive uplink information sent by the UE in the uplink, and may also send downlink data to the UE. However, sending of the downlink control information to the UE by the cell under downlink control is limited, for example, the cell under downlink control sends the downlink control information to the UE at a transmit power lower than a normal transmit power or stops sending the downlink control information to the UE. The normal transmit power is a transmit power of a downlink DPCH/F-DPCH that is indicated in an uplink TPC command sent by the UE to the network side.

For example, referring to FIG. 1b, assuming that in a first time period, an available power resource of cell 1 is less than a set power threshold, and available power resources of cell 2 and cell 3 are both greater than the set power threshold, the RNC may determine that in the first time period, cell 2 and cell 3 send downlink control information to UE 1 at a normal transmit power, and that cell 1 is a first cell, that is, cell 1 is a cell under downlink control; assuming that in a second time period, the available power resource of cell 3 is less than the set power threshold, and the available power resources of cell 1 and cell 2 are both greater than the set power threshold, the RNC may determine that in the second time period, cell 1 and cell 2 send downlink control information to UE 1 at a normal transmit power, and that cell 3 is a first cell, that is, cell 3 is a cell under downlink control.

It should be noted that, the foregoing description is provided by way of example only, and this embodiment of the present invention is not limited thereto.

In a possible implementation manner, the downlink control condition may include at least one of the following:
Condition 1: An available power resource of the first cell is less than or equal to a set power threshold.
   For example, referring to FIG. 1b, assuming that an available power resource of cell 1 is less than or equal to a set power threshold, and available power resources of cell 2 and cell 3 are both greater than the set power threshold, the RNC may determine that cell 1 is a first cell, that is, cell 1 is a cell under downlink control, and that cell 2 and cell 3 send downlink control information to UE 1 at a normal transmit power.
Condition 2: Load of the first cell is greater than or equal to a set load threshold.
   For example, the RNC may acquire load of a cell by using an interface between the RNC and a NodeB (NodeB in English). Referring to FIG. 1b, assuming that load of cell 3 is greater than or equal to a set load threshold, and load of cell 1 and load of cell 2 are both less than the set load threshold, the RNC may determine that cell 3 is a first cell, that is, cell 3 is a cell under downlink control, and may control cell 1 and cell 2 to send downlink control information to UE 1 at a normal transmit power.
Condition 3: A channel signal-to-noise ratio of the user equipment in the first cell is less than or equal to a set signal-to-noise ratio threshold.
   For example, referring to FIG. 1b, assuming that a channel signal-to-noise ratio of UE 1 in cell 2 is less than or equal to a set signal-to-noise ratio threshold, and channel signal-to-noise ratios of UE 1 in cell 1 and cell 3 are both greater than the set signal-to-noise ratio threshold, the RNC may determine that cell 2 is a first cell, that is, cell 2 is a cell under downlink control, and may control cell 1 and cell 3 to send downlink control information to UE 1 at a normal transmit power.
Condition 4: Power consumption of the first cell is greater than or equal to a set power consumption threshold.
   For example, referring to FIG. 1b, assuming that power consumption of cell 1 is greater than or equal to a set power consumption threshold, and power consumption of cell 2 and power consumption of cell 3 are both less than the set power consumption threshold, the RNC may determine that cell 1 is a first cell, that is, cell 1 is a cell under downlink control, and may control cell 2 and cell 3 to send downlink control information to UE 1 at a normal transmit power.
Condition 5: A quantity of user equipments in connected mode in the first cell is greater than or equal to a set user-equipment-quantity threshold.
   For example, referring to FIG. 1b, assume that a quantity of user equipments in connected mode in cell 3 is 4, a quantity of user equipments in connected mode in cell 1 and a quantity of user equipments in connected mode in cell 2 are both 2, and a set user-equipment-quantity threshold is 3. In this case, the quantity of user equipments in connected mode in cell 3 is greater than the set user-equipment-quantity threshold, the quantity of user equipments in connected mode in cell 1 and the quantity of user equipments in connected mode in cell 2 are both less than the set user-equipment-quantity threshold, and the RNC may determine that cell 3 is a first cell, that is, cell 3 is a cell under downlink control, and may control cell 1 and cell 2 to send downlink control information to UE 1 at a normal transmit power.
Condition 6: A priority of the user equipment in the first cell is lower than or equal to a set priority threshold.
   For example, referring to FIG. 1b, assuming that a priority of user equipment in cell 2 is lower than or equal to a set priority threshold, and priorities of the user equipment in cell 1 and cell 3 are both higher than the set priority threshold, the RNC may determine that cell 2 is a first cell, that is, cell 2 is a cell under downlink control, and may control cell 1 and cell 3 to send downlink control information to UE 1 at a normal transmit power.
Condition 7: An average path loss of the user equipment in the first cell is greater than or equal to a set average path loss threshold.
   For example, referring to FIG. 1b, assuming that an average path loss of user equipment in cell 1 is greater than or equal to a set average path loss threshold, and average path losses of the user equipment in cell 2 and cell 3 are both less than the set average path loss threshold, the RNC may determine that cell 1 is a first cell, that is, cell 1 is a cell under downlink control, and may control cell 2 and cell 3 to send downlink control information to UE 1 at a normal transmit power.
Condition 8: A downlink single-link transmit power of the user equipment in the first cell is greater than or equal to a set downlink single-link transmit power threshold.

For example, referring to FIG. 1b, assuming that a downlink single-link transmit power of user equipment in cell 2 is greater than or equal to a set downlink single-link transmit power threshold, and downlink single-link transmit powers of the user equipment in cell 1 and cell 3 are both less than the set downlink single-link transmit power threshold, the RNC may determine that cell 2 is a first cell, that is, cell 2 is a cell under downlink control, and may control cell 1 and cell 3 to send downlink control information to UE 1 at a normal transmit power.

It should be noted that although whether a cell in an active set can receive uplink information sent by user equipment is not described in this embodiment, a person skilled in the art should understand that all cells in the active set, for example, the first cell, and another cell in the active set than the first cell, can receive uplink information sent by the user equipment without being affected by the foregoing downlink control condition.

In a possible implementation manner, the determining, according to at least one downlink control condition, that a first cell is a cell under downlink control includes: if there is at least one cell, in the active set of the user equipment, that is not the cell under downlink control, and the first cell satisfies at least one downlink control condition, determining that the first cell is the cell under downlink control.

Specifically, in a case in which it is ensured that at least one cell in the active set sends downlink control information to the UE at a normal transmit power, the RNC may determine a cell under downlink control according to some downlink control conditions such as an available power resource of a cell, and if a first cell satisfies at least one downlink control condition, determine that the first cell is a cell under downlink control. In addition, in a case in which it is ensured that at least one cell in the active set sends downlink control information to the UE at a normal transmit power, the RNC may determine, in the active set and according to the downlink control condition, multiple cells as first cells.

For example, referring to FIG. 1b, assuming that in a first time period, an available power resource of cell 1 and an available power resource of cell 3 are both less than a set power threshold, and an available power resource of cell 2 is greater than the set power threshold, the RNC may determine that in the first time period, cell 2 sends downlink control information to UE 1 at a normal transmit power, and that cell 1 and cell 3 are both first cells, that is, cell 1 and cell 3 are both cells under downlink control.

Step S120: Control the first cell to decrease a transmit power at which downlink control information is sent to the user equipment, or control the first cell to stop sending the downlink control information to the user equipment.

Specifically, FIG. 1c is a schematic diagram of downlink control when user equipment is in an SHO state in the downlink control method according to Embodiment 1 of the present invention. As shown in FIG. 1c, when UE is in an SHO state, downlink control information sent by a network side to the UE may be sent over a downlink DPCH/downlink F-DPCH, where a DPCH may be used to send control information, such as a pilot, a TPC command or a TFCI, or an F-DPCH may be used to send a downlink TPC command. The UE may control and adjust a transmit power of an uplink dedicate physical control channel (Dedicate Physical Control Channel, DPCCH) according to a TPC command that is sent over a DPCH/F-DPCH. The uplink DPCCH may be used to send an uplink TPC command to the network side, and the network side may adjust a transmit power of the downlink DPCH/F-DPCH according to the received uplink TPC command. Closed-loop control over uplink and downlink transmit powers can be implemented by using the downlink TPC command transmitted over the downlink DPCH/F-DPCH and the uplink TPC command transmitted over the uplink DPCCH, where the uplink TPC command may be used to adjust the transmit power of the downlink DPCH of the network side, the purpose of adjustment is to make a received signal-to-noise ratio (Signal Noise Ratio, SNR) of the downlink F-DPCH received by the UE converge to a target SNR value SNR_{target} of the downlink DPCH, and the target value SNR_{target} is assigned by a higher layer of a protocol stack.

Specifically, the UE can send uplink information, such as uplink control information or uplink data to all cells in the active set, all the cells in the active set can receive the uplink information sent by the UE in the uplink, and all the cells in the active set can send downlink data to the UE. However, after determining the first cell, the RNC may control the first cell to decrease the transmit power at which downlink control information is sent to the UE, or control the first cell to stop sending downlink control information to the UE. For example, the RNC may control the first cell to decrease a transmit power at which downlink DPCH/F-DPCH information is sent to the UE, or may control the first cell to stop sending downlink DPCH/F-DPCH information to the UE. Correspondingly, the RNC may control all cells in the active set except the first cell to send downlink control information to the UE at a normal transmit power. If the first cell sends downlink control information to the UE, utilization efficiency of downlink power resources of the network is reduced.

In a possible implementation manner, the controlling the first cell to decrease a transmit power at which downlink control information is sent to the user equipment includes:
controlling, in a first time period of each control cycle, the first cell to decrease the transmit power at which the downlink control information is sent to the user equipment, where duration of the first time period is less than or equal to duration of the control cycle.

For example, referring to FIG. 1b, assume that the control cycle is 800 ms, the first time period is 600 ms, and the RNC determines that cell 2 and cell 3 send downlink control information to UE 1 at a normal transmit power, and that cell 1 is a first cell, that is, cell 1 is a cell under downlink control. In this case, the RNC may control cell 1 to decrease, within 600 ms, a transmit power at which downlink control information is sent to UE 1.

In a possible implementation manner, the controlling the first cell to stop sending the downlink control information to the user equipment includes:
controlling, in a first time period of each control cycle, the first cell to stop sending the downlink control information to the user equipment, where duration of the first time period is less than or equal to duration of the control cycle.

For example, referring to FIG. 1b, assume that the control cycle is 800 ms, the first time period is 700 ms, and the RNC determines that cell 1 and cell 3 send downlink control information to UE 1 at a normal transmit power, and that cell 2 is a first cell, that is, cell 2 is a cell under downlink control. In this case, the RNC may control cell 2 to stop, within 700 ms, sending downlink control information to UE 1.

According to the downlink control method of this embodiment, it is determined, in an active set and according to at least one downlink control condition, that a first cell is a cell under downlink control, and the first cell is controlled to decrease a transmit power at which downlink control information is sent to user equipment, or the first cell is controlled to stop sending the downlink control information to the user equipment, thereby reducing downlink power resources occupied by the user equipment and improving utilization efficiency of downlink power resources.

### Embodiment 2

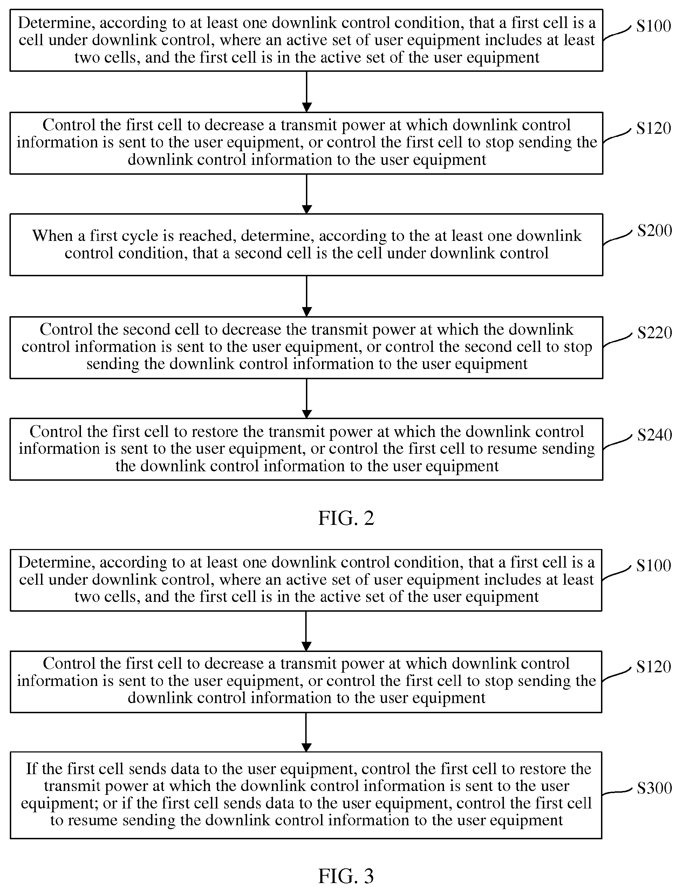

FIG. 2 is a flowchart of a downlink control method according to Embodiment 2 of the present invention. Steps in FIG. 2 that have the same reference signs as those in FIG. 1a have the same functions, and for brevity, detailed descriptions of these steps are omitted.

As shown in FIG. 2, the downlink control method shown in FIG. 2 is mainly different from the downlink control method shown in FIG. 1a in that in addition to step S100 and step S120 in the foregoing Embodiment 1, the downlink control method shown in FIG. 2 may further include:
Step S200: When a first cycle is reached, determine, according to the at least one downlink control condition, that a second cell is the cell under downlink control.

Specifically, after an RNC determines a first cell within the 1^{st} first cycle, when the 2^{nd} first cycle is reached, the RNC may determine, in the active set and according to the at least one downlink control condition, that a second cell is the cell under downlink control. That is, the cell under downlink control may change as resources of cells in the active set dynamically change. The first cell and the second cell may be a same cell, or may be different cells.

For example, referring to FIG. 1b, assuming that the first cycle is 800 ms, an available power resource of cell 2 is less than or equal to a set power threshold, and available power resources of cell 1 and cell 3 are both greater than the set power threshold, the RNC may determine within the first 800 ms that cell 2 is a first cell, and that cell 1 and cell 3 send downlink control information to UE 1 at a normal transmit power. After the first 800 ms expires, within the second 800 ms, if the available power resource of cell 1 is less than or equal to the set power threshold, the available power resource of cell 2 is still less than or equal to the set power threshold, and the available power resource of cell 3 is still greater than the set power threshold, the RNC may determine within the second 800 ms that cell 1 and cell 2 are first cells, and that cell 3 sends downlink control information to UE 1 at a normal transmit power.

Step S220: Control the second cell to decrease the transmit power at which the downlink control information is sent to the user equipment, or control the second cell to stop sending the downlink control information to the user equipment.

Specifically, after determining that the second cell is a cell under downlink control, the RNC may control the second cell to decrease the transmit power at which the downlink control information is sent to the UE, or control the second cell to stop sending the downlink control information to the UE. For example, the RNC may control the second cell to decrease a transmit power at which downlink DPCH/F-DPCH information is sent to the UE, or may control the second cell to stop sending the downlink DPCH/F-DPCH information to the UE. Correspondingly, the RNC may control all cells in the active set except the cell under downlink control to send downlink control information to the UE at a normal transmit power. For details about that the RNC controls the second cell to decrease the transmit power at which the downlink control information is sent to the user equipment or controls the second cell to stop sending the downlink control information to the user equipment, refer to the related description in step S120 in the foregoing Embodiment 1.

Step S240: Control the first cell to restore the transmit power at which the downlink control information is sent to the user equipment, or control the first cell to resume sending the downlink control information to the user equipment.

For example, assuming that the first cycle is 800 ms, an available power resource of cell 2 is less than or equal to a set power threshold, and available power resources of cell 1 and cell 3 are both greater than the set power threshold, the RNC may determine within the first 800 ms that cell 2 is a first cell, and that cell 1 and cell 3 send downlink control information to UE 1 at a normal transmit power. After the first 800 ms expires, within the second 800 ms, if the available power resource of cell 1 is less than or equal to the set power threshold, the available power resource of cell 2 is greater than the set power threshold, and the available power resource of cell 3 is still greater than the set power threshold, the RNC may determine within the second 800 ms that cell 2 is a first cell, and that cell 1 and cell 3 send downlink control information to UE 1 at a normal transmit power. In addition, the RNC may control cell 1 to restore the transmit power at which the downlink control information is sent to UE 1, or may control cell 1 to resume sending the downlink control information to UE 1.

According to the downlink control method of this embodiment, it is determined, in an active set and according to at least one downlink control condition, that a first cell is a cell under downlink control, and the first cell is controlled to decrease a transmit power at which downlink control information is sent to user equipment, or the first cell is controlled to stop sending the downlink control information to the user equipment, thereby reducing downlink power resources occupied by the user equipment and improving utilization efficiency of downlink power resources. In addition, the determined cell under downlink control dynamically changes as the cycle changes, thereby further reducing the downlink power resources occupied by the user equipment and improving the utilization efficiency of downlink power resources.

### Embodiment 3

FIG. 3 is a flowchart of a downlink control method according to Embodiment 3 of the present invention. Steps in FIG. 3 that have the same reference signs as those in FIG. 1a have the same functions, and for brevity, detailed descriptions of these steps are omitted.

As shown in FIG. 3, the method shown in FIG. 3 is mainly different from the method shown in FIG. 1a in that in addition to step S100 and step S120 in the foregoing Embodiment 1, the method shown in FIG. 3 may further include:
Step S300: If the first cell sends data to the user equipment, control the first cell to restore the transmit power at which the downlink control information is sent to the user equipment; or if the first cell sends data to the user equipment, control the first cell to resume sending the downlink control information to the user equipment.

For example, referring to FIG. 1b, assume that in a first time period, an RNC determines that cell 2 and cell 3 send downlink control information to UE 1 at a normal transmit power, and that cell 1 is a first cell, that is, cell 1 is a cell under downlink control. If the RNC controls cell 1 to decrease a transmit power at which downlink control information is sent to UE 1, and cell 1 needs to send data to UE 1, the RNC may control cell 1 to restore the transmit power at which the downlink control information is sent to UE 1, so that cell 1 may send the downlink control information to UE 1 at a normal transmit power. If the RNC controls cell 1 to stop sending the downlink control information to UE 1, and cell 1 needs to send data to UE 1, the RNC may control cell 1 to resume sending the downlink control information to UE 1, so that cell 1 may send the downlink control information to UE 1 at a normal transmit power.

Specifically, it is described in the foregoing step S300 that if the first cell sends data to the user equipment, the RNC controls the first cell to restore the transmit power at which the downlink control information is sent to the user equipment, or controls the first cell to resume sending the downlink control information to the user equipment. However, if a second cell sends data to the user equipment, the RNC may control the second cell to restore the transmit power at which the downlink control information is sent to the user equipment, or may control the second cell to resume sending the downlink control information to the user equipment.

For example, referring to FIG. 1b, assuming that the first cycle is 800 ms, after the first 800 ms expires, within the second 800 ms, the RNC determines that cell 2 and cell 3 send downlink control information to UE 1 at a normal transmit power, and that cell 1 is a second cell, that is, cell 1 is a cell under downlink control. If the RNC controls cell 1 to decrease the transmit power at which the downlink control information is sent to UE 1, and cell 1 needs to send data to UE 1, the RNC may control cell 1 to restore the transmit power at which the downlink control information is sent to UE 1, so that cell 1 may send the downlink control information to UE 1 at a normal transmit power. If the RNC controls cell 1 to stop sending the downlink control information to UE 1, and cell 1 needs to send data to UE 1, the RNC may control cell 1 to resume sending the downlink control information to UE 1, so that cell 1 may send the downlink control information to UE 1 at a normal transmit power.

According to the downlink control method of this embodiment, it is determined, in an active set and according to at least one downlink control condition, that a first cell is a cell under downlink control, and the first cell is controlled to decrease a transmit power at which downlink control information is sent to user equipment, or the first cell is controlled to stop sending the downlink control information to the user equipment, thereby reducing downlink power resources occupied by the user equipment and improving utilization efficiency of downlink power resources. In addition, the determined cell under downlink control dynamically changes as the cycle changes, thereby further reducing the downlink power resources occupied by the user equipment and improving the utilization efficiency of downlink power resources. When the foregoing cell under downlink control needs to send data to the user equipment, the cell under downlink control can be quickly restored to send the data to the user equipment at a normal transmit power, thereby ensuring service continuity of the user equipment.

### Embodiment 4

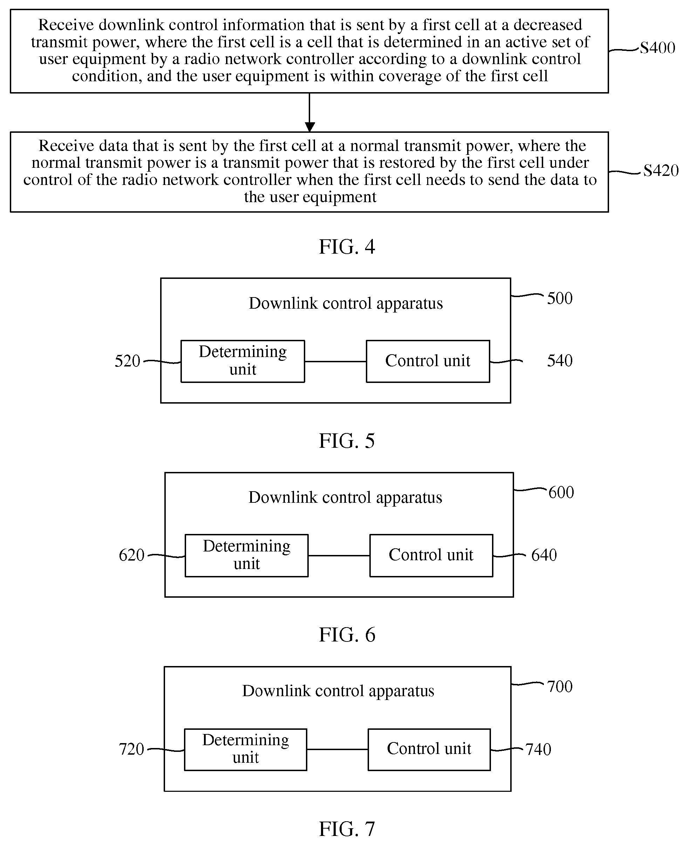

FIG. 4 is a flowchart of a downlink control method according to Embodiment 4 of the present invention. As shown in FIG. 4, the downlink control method may include:
Step S400: Receive downlink control information that is sent by a first cell at a decreased transmit power, where the first cell is a cell that is determined in an active set of user equipment by a radio network controller according to a downlink control condition, and the user equipment is within coverage of the first cell.

Specifically, user equipment (UE), such as a mobile phone, a smartphone, a computer, or an in-vehicle mobile apparatus, can maintain an online connection to a network side such as a radio network controller (RNC). In a same time period, a large quantity of UEs may maintain an online connection to a network side at the same time. When UE is in an SHO state, in a process of handing over the UE from one cell to another cell, the network side always communicates with the UE by using at least one cell; therefore, the network side needs to control multiple cells to serve one UE at the same time, and send control information to the UE. Multiple cells simultaneously connected to one UE belong to a same active set, that is, an active set includes at least two cells connected to the UE. In addition, cells included in an active set of UE may change with time and different signals. Referring to FIG. 1b, cell 1, cell 2 and cell 3 are cells connected to UE 1; accordingly, an active set of UE 1 may include cell 1, cell 2 and cell 3, and the active set may be stored in the network side, for example, in an RNC.

The UE can send uplink information to the first cell, and the UE can receive downlink control information that is sent at a normal transmit power by another cell in the active set other than the first cell. In addition, the UE can also receive downlink control information that is sent by the first cell at a decreased transmit power.

For example, referring to FIG. 1b, assuming that in a first time period, an RNC determines that cell 1 is a first cell, UE 1 may receive downlink control information that is sent by cell 1 at a decreased transmit power, and UE 1 may also receive downlink control information that is sent by cell 2 and cell 3 at a normal transmit power. Assuming that in a second time period, the RNC determines that cell 3 is a first cell, the UE 1 may receive downlink control information that is sent by cell 3 at a decreased transmit power, and UE 1 may also receive downlink control information that is sent by cell 1 and cell 2 at a normal transmit power.

Step S420: Receive data that is sent by the first cell at a normal transmit power, where the normal transmit power is a transmit power that is restored by the first cell under control of the radio network controller when the first cell needs to send the data to the user equipment.

For example, referring to FIG. 1b, assuming that that in a first time period, the RNC determines that cell 1 is a first cell, UE 1 may receive downlink control information that is sent by cell 2 and cell 3 at a normal transmit power, and UE 1 may also receive downlink control information that is sent by cell 1 at a decreased transmit power. If the RNC controls cell 1 to restore the transmit power at which the downlink control information is sent to UE 1, the UE 1 may receive data that is sent by cell 1 at a normal transmit power.

According to the downlink control method of this embodiment, in a case in which user equipment receives downlink control information that is sent by at least one cell at a normal transmit power, downlink control information that is sent by a first cell at a decreased transmit power can be received, thereby reducing downlink power resources occupied by the user equipment and improving utilization efficiency of downlink power resources. In addition, when the first cell needs to send data to the user equipment, data sent by the first cell at a normal transmit power can be received, thereby ensuring service continuity of the user equipment.

### Embodiment 5

FIG. 5 is a structural block diagram of a downlink control apparatus according to Embodiment 5 of the present invention. The downlink control apparatus 500 provided by this embodiment is configured to implement the downlink control method provided by Embodiment 1 shown in FIG. 1a. As shown in FIG. 5, the downlink control apparatus 500 may include:
a determining unit 520, configured to determine, according to at least one downlink control condition, that a first cell is a cell under downlink control, where an active set of user equipment includes at least two cells, and the first cell is in the active set of the user equipment.

Specifically, user equipment, such as a mobile phone, a smartphone, a computer, or an in-vehicle mobile apparatus, can maintain an online connection to a network side such as a radio network controller (RNC). In a same time period, a large quantity of UEs may maintain an online connection to a network side at the same time. When UE is in an SHO state, in a process of handing over the UE from one cell to another cell, the network side always communicates with the UE by using at least one cell; therefore, the network side needs to control multiple cells to serve one UE at the same time, and send control information to the UE. Multiple cells simultaneously connected to one UE belong to a same active set, that is, an active set includes at least two cells connected to the UE. In addition, cells included in an active set of UE may change with time and different signals. For a specific example, refer to the related description of step S100 in the foregoing Embodiment 1.

In addition, the first cell can receive uplink information sent by the UE, and other cells in the active set than the first cell not only can send downlink control information to the UE at a normal transmit power, but also can receive the uplink information sent by the UE. That is, all the cells in the active set can receive uplink information sent by the UE without being affected by the downlink control condition. In other words, uplink and downlink are not symmetrical, that is, other cells in the active set than the first cell can send downlink control information to the UE at a normal transmit power, and all the cells in the active set can receive the uplink information sent by the UE. Correspondingly, the first cell can change as the downlink control condition changes, that is, the first cell can change as the downlink control condition dynamically changes.

The downlink control apparatus 500 may be disposed in an RNC, and the determining unit 520 may determine that the first cell is the cell under downlink control. For example, referring to FIG. 1b, assuming that in a first time period, an available power resource of cell 1 is less than a set power threshold, and available power resources of cell 2 and cell 3 are both greater than the set power threshold, the determining unit 520 may determine that in the first time period, cell 1 is a first cell, that is, cell 1 is a cell under downlink control; assuming that in a second time period, the available power resource of cell 3 is less than the set power threshold, and the available power resources of cell 1 and cell 2 are both greater than the set power threshold, the determining unit 520 may determine that in the second time period, cell 3 is a first cell, that is, cell 3 is a cell under downlink control.

In a possible implementation manner, the downlink control condition may include:
Condition 1: An available power resource of the first cell is less than or equal to a set power threshold.
Condition 2: Load of the first cell is greater than or equal to a set load threshold.
Condition 3: A channel signal-to-noise ratio of the user equipment in the first cell is less than or equal to a set signal-to-noise ratio threshold.
Condition 4: Power consumption of the first cell is greater than or equal to a set power consumption threshold.
Condition 5: A quantity of user equipments in connected mode in the first cell is greater than or equal to a set user-equipment-quantity threshold.
Condition 6: A priority of the user equipment in the first cell is lower than or equal to a set priority threshold.
Condition 7: An average path loss of the user equipment in the first cell is greater than or equal to a set average path loss threshold.
Condition 8: A downlink single-link transmit power of the user equipment in the first cell is greater than or equal to a set downlink single-link transmit power threshold.

For specific examples of the foregoing Condition 1 to Condition 8, refer to the specific examples of Condition 1 to Condition 8 in step S100 in the foregoing Embodiment 1.

In a possible implementation manner, the determining unit 520 is further configured to: if there is at least one cell, in the active set of the user equipment, that is not the cell under downlink control, and the first cell satisfies the following at least one downlink control condition, determine that the first cell is the cell under downlink control.

Specifically, in a case in which it is ensured that at least one cell in the active set sends downlink control information to the UE at a normal transmit power, the determining unit 520 may determine a cell under downlink control according to some downlink control conditions such as an available power resource of a cell, and if a first cell satisfies at least one downlink control condition, the determining unit 520 may determine that the first cell is a cell under downlink control. In addition, in a case in which it is ensured that at least one cell in the active set sends downlink control information to the UE at a normal transmit power, the determining unit 420 may determine, in the active set and according to the downlink control condition, multiple cells as first cells.

For example, referring to FIG. 1b, assuming that in a first time period, an available power resource of cell 1 and an available power resource of cell 3 are both less than a set power threshold, and an available power resource of cell 2 is greater than the set power threshold, the determining unit 520 may determine that in the first time period, cell 2 sends downlink control information to UE 1 at a normal transmit power, and that cell 1 and cell 3 are both first cells, that is, cell 1 and cell 3 are both cells under downlink control.
a control unit 540, connected to the determining unit 520, and configured to control the first cell to decrease a transmit power at which downlink control information is sent to the user equipment, or control the first cell to stop sending the downlink control information to the user equipment.

Specifically, the UE can send uplink information, such as uplink control information or uplink data to all cells in the active set, all the cells in the active set can receive the uplink information sent by the UE in the uplink, and all the cells in the active set can send downlink data to the UE. However, after the determining unit 520 determines the first cell, the control unit 540 may control the first cell to decrease the transmit power at which downlink control information is sent to the UE, or the control unit 440 controls the first cell to stop sending downlink control information to the UE. For example, the control unit 540 may control the first cell to decrease a transmit power at which downlink DPCH/F-DPCH information is sent to the UE, or the control unit 540 may control the first cell to stop sending downlink DPCH/F-DPCH information to the UE. Correspondingly, the control unit 540 may control other cells in the active set than the first cell to send downlink control information to the UE at a normal transmit power. If the first cell sends downlink control information to the UE, utilization efficiency of downlink power resources of the network is reduced.

In a possible implementation manner, the control unit 540 is further configured to control, in a first time period of each control cycle, the first cell to decrease the transmit power at which the downlink control information is sent to the user equipment, where duration of the first time period is less than or equal to duration of the control cycle.

For example, referring to FIG. 1b, assume that the control cycle is 800 ms, the first time period is 600 ms, and the determining unit 520 determines that cell 2 and cell 3 send downlink control information to UE 1 at a normal transmit power, and that cell 1 is a first cell, that is, cell 1 is a cell under downlink control. In this case, the control unit 540 may control cell 1 to decrease, within 600 ms, a transmit power at which downlink control information is sent to UE 1.

In a possible implementation manner, the control unit 540 is further configured to control, in a first time period of each control cycle, the first cell to stop sending the downlink control information to the user equipment, where duration of the first time period is less than or equal to duration of the control cycle.

For example, referring to FIG. 1b, assume that the control cycle is 800 ms, the first time period is 700 ms, and the determining unit 520 determines that cell 1 and cell 3 send downlink control information to UE 1 at a normal transmit power, and that cell 2 is a first cell, that is, cell 2 is a cell under downlink control. In this case, the control unit 540 may control cell 2 to stop, within 700 ms, sending downlink control information to UE 1.

According to the downlink control apparatus of this embodiment, a determining unit determines, in an active set and according to at least one downlink control condition, that a first cell is a cell under downlink control, and a control unit controls the first cell to decrease a transmit power at which downlink control information is sent to user equipment, or controls the first cell to stop sending downlink control information to the user equipment, thereby reducing downlink power resources occupied by the user equipment and improving utilization efficiency of downlink power resources.

### Embodiment 6

FIG. 6 is a structural block diagram of a downlink control apparatus according to Embodiment 5 of the present invention. The downlink control apparatus 600 provided by this embodiment is configured to implement the downlink control method provided by Embodiment 2 shown in FIG. 2.

As shown in FIG. 6, the downlink control apparatus 600 shown in FIG. 6 is mainly different from the downlink control apparatus 500 shown in FIG. 5 in that, a determining unit 620 and a control unit 640 are not only configured to execute steps S100 and S120 in the foregoing Embodiment 1, but also are further configured to execute step S200, step S220 and step S240 in the foregoing Embodiment 2.

The determining unit 620 is further configured to: when a first cycle is reached, determine, according to the at least one downlink control condition, that a second cell is the cell under downlink control.

Specifically, after the determining unit 620 determines a first cell within the 1^{st} first cycle, when the 2^{nd} first cycle is reached, the determining unit 620 may determine, in the active set and according to the at least one downlink control condition, that a second cell is the cell under downlink control. That is, the cell under downlink control may change as resources of cells in the active set dynamically change. The first cell and the second cell may be a same cell, or may be different cells.

For example, referring to FIG. 1b, assuming that the first cycle is 800 ms, an available power resource of cell 2 is less than or equal to a set power threshold, and available power resources of cell 1 and cell 3 are both greater than the set power threshold, the determining unit 620 may determine within the first 800 ms that cell 2 is a first cell, and that cell 1 and cell 3 send downlink control information to UE 1 at a normal transmit power. After the first 800 ms expires, within the second 800 ms, if the available power resource of cell 1 is less than or equal to the set power threshold, the available power resource of cell 2 is still less than or equal to the set power threshold, and the available power resource of cell 3 is still greater than the set power threshold, the determining unit 620 may determine within the second 800 ms that cell 1 and cell 2 are first cells, and that cell 3 sends downlink control information to UE 1 at a normal transmit power.

The control unit 640 is further configured to control the second cell to decrease the transmit power at which the downlink control information is sent to the user equipment, or control the second cell to stop sending the downlink control information to the user equipment.

Specifically, after the determining unit 620 determines that the second cell is a cell under downlink control, the control unit 640 may control the second cell to decrease the transmit power at which the downlink control information is sent to the UE, or the control unit 640 controls the second cell to stop sending the downlink control information to the UE. For example, the control unit 640 may control the second cell to decrease a transmit power at which downlink DPCH/F-DPCH information is sent to the UE, or the control unit 640 may control the second cell to stop sending the downlink DPCH/F-DPCH information to the UE. Correspondingly, the control unit 640 may control all cells in the active set except the cell under downlink control to send downlink control information to the UE at a normal transmit power. For details about that the control unit 640 controls the second cell to decrease the transmit power at which the downlink control information is sent to the user equipment or the control unit 640 controls the second cell to stop sending the downlink control information to the user equipment, refer to the related description in step S120 in the foregoing Embodiment 1.

The control unit 640 is further configured to control the first cell to restore the transmit power at which the downlink control information is sent to the user equipment, or control the first cell to resume sending the downlink control information to the user equipment.

For example, assuming that the first cycle is 800 ms, an available power resource of cell 2 is less than or equal to a set power threshold, and available power resources of cell 1 and cell 3 are both greater than the set power threshold, the determining unit 620 may determine within the first 800 ms that cell 2 is a first cell, and the control unit 640 controls cell 1 and cell 3 to send downlink control information to UE 1 at a normal transmit power. After the first 800 ms expires, within the second 800 ms, if the available power resource of cell 1 is less than or equal to the set power threshold, the available power resource of cell 2 is greater than the set power threshold, and the available power resource of cell 3 is still greater than the set power threshold, the determining unit 620 may determine within the second 800 ms that cell 2 is a first cell, and the control unit 640 controls cell 1 and cell 3 to send downlink control information to UE 1 at a normal transmit power. In addition, the control unit 640 may control cell 1 to restore the transmit power at which the downlink control information is sent to UE 1, or may control cell 1 to resume sending the downlink control information to UE 1.

According to the downlink control apparatus of this embodiment, a determining unit determines, in an active set and according to at least one downlink control condition, that a first cell is a cell under downlink control, and a control unit controls the first cell to decrease a transmit power at which downlink control information is sent to user equipment, or controls the first cell to stop sending downlink control information to the user equipment, thereby reducing downlink power resources occupied by the user equipment and improving utilization efficiency of downlink power resources. In addition, the cell under downlink control determined by the determining unit dynamically changes as the cycle changes, thereby further reducing the downlink power resources occupied by the user equipment and improving utilization efficiency of downlink power resources.

### Embodiment 7

FIG. 7 is a structural block diagram of a downlink control apparatus according to Embodiment 6 of the present invention. The downlink control apparatus 700 provided by this embodiment is configured to implement the downlink control method provided by Embodiment 3 shown in FIG. 3.

As shown in FIG. 7, the downlink control apparatus 700 shown in FIG. 7 is mainly different from the downlink control apparatus 500 shown in FIG. 5 in that, a determining unit 720 and a control unit 740 are not only configured to execute steps S100 and S120 in the foregoing Embodiment 1, but also are further configured to execute step S300 in the foregoing Embodiment 3.

The control unit 740 is further configured to: if the first cell sends data to the user equipment, control the first cell to restore the transmit power at which the downlink control information is sent to the user equipment; or if the first cell sends data to the user equipment, control the first cell to resume sending the downlink control information to the user equipment.

For example, referring to FIG. 1b, assume that in a first time period, the determining unit 720 determines that cell 2 and cell 3 send downlink control information to UE 1 at a normal transmit power, and that cell 1 is a first cell, that is, cell 1 is a cell under downlink control. If the control unit 740 controls cell 1 to decrease a transmit power at which downlink control information is sent to UE 1, and cell 1 needs to send data to UE 1, the control unit 740 controls cell 1 to restore the transmit power at which the downlink control information is sent to UE 1, so that cell 1 may send downlink control information to UE 1 at a normal transmit power. If the control unit 740 controls cell 1 to stop sending the downlink control information to UE 1, and cell 1 needs to send data to UE 1, the control unit 740 controls cell 1 to resume sending the downlink control information to UE 1, so that cell 1 may send downlink control information to UE 1 at a normal transmit power.

Specifically, the control unit 740 is configured to: if the first cell sends data to the user equipment, the control unit 740 controls the first cell to restore the transmit power at which the downlink control information is sent to the user equipment, or the control unit 740 controls the first cell to resume sending the downlink control information to the user equipment. However, if a second cell sends data to the user equipment, the control unit 740 may control the second cell to restore the transmit power at which the downlink control information is sent to the user equipment, or the control unit 740 may control the second cell to resume sending the downlink control information to the user equipment.

For example, referring to FIG. 1b, assuming that the first cycle is 800 ms, after the first 800 ms expires, within the second 800 ms, the determining unit 720 determines that cell 2 and cell 3 send downlink control information to UE 1 at a normal transmit power, and that cell 1 is a second cell, that is, cell 1 is a cell under downlink control. If the control unit 740 controls cell 1 to decrease the transmit power at which the downlink control information is sent to UE 1, and cell 1 needs to send data to UE 1, the control unit 740 may control cell 1 to restore the transmit power at which the downlink control information is sent to UE 1, so that cell 1 may send downlink control information to UE 1 at a normal transmit power. If the control unit 740 controls cell 1 to stop sending the downlink control information to UE 1, and cell 1 needs to send data to UE 1, the control unit 740 may control cell 1 to resume sending the downlink control information to UE 1, so that cell 1 may send downlink control information to UE 1 at a normal transmit power.

According to the downlink control apparatus of this embodiment, a determining unit determines, in an active set and according to at least one downlink control condition, that a first cell is a cell under downlink control, and a control unit controls the first cell to decrease a transmit power at which downlink control information is sent to user equipment, or controls the first cell to stop sending downlink control information to the user equipment, thereby reducing downlink power resources occupied by the user equipment and improving utilization efficiency of downlink power resources. In addition, the cell under downlink control determined by the determining unit dynamically changes as the cycle changes, thereby further reducing the downlink power resources occupied by the user equipment and improving utilization efficiency of downlink power resources. When the foregoing cell under downlink control needs to send data to the user equipment, the adjusting unit can quickly restore the cell under downlink control to send the data to the user equipment at a normal transmit power, thereby ensuring service continuity of the user equipment.

### Embodiment 8

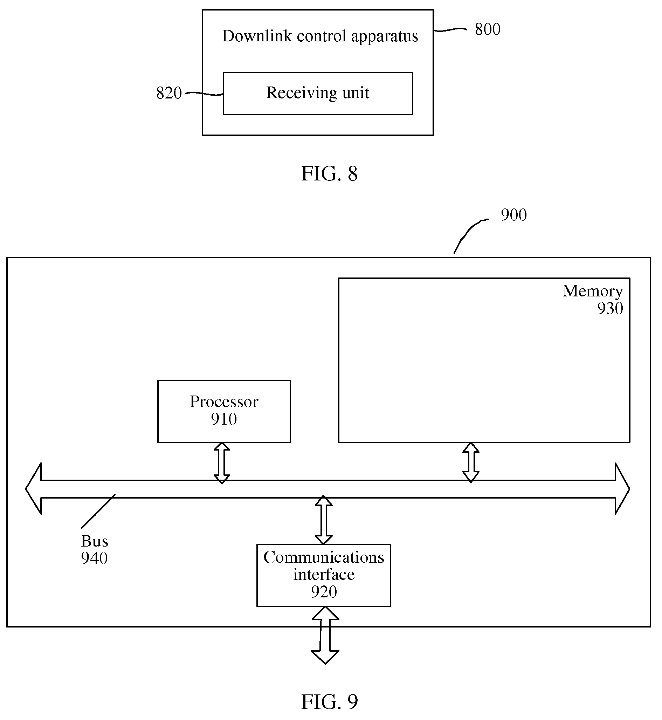

FIG. 8 is a structural block diagram of a downlink control apparatus according to Embodiment 8 of the present invention. The downlink control apparatus 800 provided by this embodiment is configured to implement the downlink control method provided by Embodiment 4 shown in FIG. 4. As shown in FIG. 8, the downlink control apparatus 800 may include:
a receiving unit 820, configured to receive downlink control information that is sent by a first cell at a decreased transmit power, where the first cell is a cell that is determined in an active set of the apparatus by a radio network controller according to a downlink control condition, and the apparatus is within coverage of the first cell.

Specifically, user equipment (UE), such as a mobile phone, a smartphone, a computer, or an in-vehicle mobile apparatus, can maintain an online connection to a network side such as a radio network controller (RNC). In a same time period, a large quantity of UEs may maintain an online connection to a network side at the same time. When UE is in an SHO state, in a process of handing over the UE from one cell to another cell, the network side always communicates with the UE by using at least one cell; therefore, the network side needs to control multiple cells to serve one UE at the same time, and send control information to the UE. Multiple cells simultaneously connected to one UE belong to a same active set, that is, an active set includes at least two cells connected to the UE. In addition, cells included in an active set of UE may change with time and different signals. Referring to FIG. 1b, cell 1, cell 2 and cell 3 are cells connected to UE 1; accordingly, an active set of UE 1 may include cell 1, cell 2 and cell 3, and the active set may be stored in the network side, for example, in an RNC.

The UE can send uplink information to the first cell, and the receiving unit 820 can receive downlink control information that is sent at a normal transmit power by another cell in the active set other than the first cell. In addition, the receiving unit 820 can also receive downlink control information that is sent by the first cell at a decreased transmit power.

For example, referring to FIG. 1b, assuming that in a first time period, an RNC determines that cell 1 is a first cell, the receiving unit 820 may receive downlink control information that is sent by cell 1 at a decreased transmit power, and the receiving unit 820 may also receive downlink control information that is sent by cell 2 and cell 3 at a normal transmit power. Assuming that in a second time period, the RNC determines that cell 3 is a first cell, the receiving unit 820 may receive downlink control information that is sent by cell 3 at a decreased transmit power, and the receiving unit 820 may also receive downlink control information that is sent by cell 1 and cell 2 at a normal transmit power.

In a possible implementation manner, the receiving unit 820 is further configured to receive data that is sent by the first cell at a normal transmit power, where the normal transmit power is a transmit power that is restored by the first cell under control of the radio network controller when the first cell needs to send the data to the apparatus.

For example, referring to FIG. 1b, assuming that that in a first time period, the RNC determines that cell 1 is a first cell, the receiving unit 820 may receive downlink control information that is sent by cell 2 and cell 3 at a normal transmit power, and the receiving unit 820 may also receive downlink control information that is sent by cell 1 at a decreased transmit power. If the RNC controls cell 1 to restore the transmit power at which the downlink control information is sent to UE 1, the receiving unit 820 may receive data that is sent by cell 1 at a normal transmit power.

According to the downlink control method of this embodiment, in a case in which user equipment receives downlink control information that is sent by at least one cell at a normal transmit power, the receiving unit can receive downlink control information that is sent by a first cell at a decreased transmit power, thereby reducing downlink power resources occupied by the user equipment and improving utilization efficiency of downlink power resources. In addition, when the first cell needs to send data to the user equipment, the receiving unit can receive data sent by the first cell at a normal transmit power, thereby ensuring service continuity of the user equipment.

### Embodiment 9

FIG. 9 is a structural block diagram of a downlink control apparatus according to Embodiment 9 of the present invention. The downlink control apparatus 900 may be a host server, a personal computer PC, a portable computer or terminal or the like that has a computing capability. Specific implementation of a computing node is not limited in specific embodiments of the present invention.

The downlink control apparatus 900 includes a processor (processor) 910, a communications interface (Communications Interface) 920, a memory (memory array) 930, and a bus 940. The processor 910, the communications interface 920, and the memory 930 communicate with each other by using the bus 940.

The communications interface 920 is configured to communicate with a network element, where the network element includes, for example, a virtual machine management center and a shared memory.

The processor 910 is configured to run a program. The processor 910 may be a central processing unit CPU, or an application-specific integrated circuit (Application Specific Integrated Circuit, ASIC), or one or more integrated circuits configured to implement this embodiment of the present invention.

The memory 930 is configured to store a file. The memory 930 may include a high-speed RAM memory, and may further include a non-volatile memory (non-volatile memory), for example, at least one magnetic disk storage. The memory 930 may also be a memory array. The memory 930 may further be divided into blocks, and the blocks can be combined according to a particular rule to form a virtual volume.

In a possible implementation manner, the foregoing program may be program code including computer operation instructions. The program may be specifically be used to:
determine, according to at least one downlink control condition, that a first cell is a cell under downlink control, where an active set of user equipment includes at least two cells, and the first cell is in the active set of the user equipment; and
control the first cell to decrease a transmit power at which downlink control information is sent to the user equipment, or
control the first cell to stop sending the downlink control information to the user equipment.

In a possible implementation manner, the controlling the first cell to decrease a transmit power at which downlink control information is sent to the user equipment includes:
controlling, in a first time period of each control cycle, the first cell to decrease the transmit power at which the downlink control information is sent to the user equipment, where duration of the first time period is less than or equal to duration of the control cycle.

In a possible implementation manner, the controlling the first cell to stop sending the downlink control information to the user equipment includes:
controlling, in a first time period of each control cycle, the first cell to stop sending the downlink control information to the user equipment, where duration of the first time period is less than or equal to duration of the control cycle.

In a possible implementation manner, the program may specifically be further used to:
when a first cycle is reached, determine, according to the at least one downlink control condition, that a second cell is the cell under downlink control;
control the second cell to decrease the transmit power at which the downlink control information is sent to the user equipment, or
control the second cell to stop sending the downlink control information to the user equipment; and
control the first cell to restore the transmit power at which the downlink control information is sent to the user equipment, or
control the first cell to resume sending the downlink control information to the user equipment.

In a possible implementation manner, the program may specifically be further used to:
if the first cell sends data to the user equipment, control the first cell to restore the transmit power at which the downlink control information is sent to the user equipment; or
if the first cell sends data to the user equipment, control the first cell to resume sending the downlink control information to the user equipment.

In a possible implementation manner,

In a possible implementation manner, the downlink control condition includes any one or more of the following: the determining, according to at least one downlink control condition, that a first cell is a cell under downlink control includes: if there is at least one cell, in the active set of the user equipment, that is not the cell under downlink control, and the first cell satisfies the following at least one downlink control condition, determining that the first cell is the cell under downlink control, where
the downlink control condition includes:
an available power resource of the first cell is less than or equal to a set power threshold; or
load of the first cell is greater than or equal to a set load threshold; or
a channel signal-to-noise ratio of the user equipment in the first cell is less than or equal to a set signal-to-noise ratio threshold; or
power consumption of the first cell is greater than or equal to a set power consumption threshold; or
a quantity of user equipments in connected mode in the first cell is greater than or equal to a set user-equipment-quantity threshold; or
a priority of the user equipment in the first cell is lower than or equal to a set priority threshold; or
an average path loss of the user equipment in the first cell is greater than or equal to a set average path loss threshold; or
a downlink single-link transmit power of the user equipment in the first cell is greater than or equal to a set downlink single-link transmit power threshold.

The program may specifically be further used to:
receive downlink control information that is sent by a first cell at a decreased transmit power, where the first cell is a cell that is determined in an active set of the apparatus by a radio network controller according to a downlink control condition, and the apparatus is within coverage of the first cell.

In a possible implementation manner, data that is sent by the first cell at a normal transmit power is received, where the normal transmit power is a transmit power that is restored by the first cell under control of the radio network controller when the first cell needs to send the data to the apparatus.

According to the downlink control method of this embodiment, it is determined, in an active set and according to at least one downlink control condition, that a first cell is a cell under downlink control, and the first cell is controlled to decrease a transmit power at which downlink control information is sent to user equipment, or the first cell is controlled to stop sending the downlink control information to the user equipment, thereby reducing downlink power resources occupied by the user equipment and improving utilization efficiency of downlink power resources.

A person of ordinary skill in the art may be aware that, exemplary units and algorithm steps in the embodiments described in this specification may be implemented by electronic hardware or a combination of computer software and electronic hardware. Whether the functions are implemented in a form of hardware or software depends on particular applications and design constraint conditions of the technical solutions. A person skilled in the art may select different methods to implement the described functions for a particular application, but it should not be considered that the implementation goes beyond the scope of the present invention.

If the functions are implemented in a form of computer software and sold or used as an independent product, it can be deemed to some extent that all or some of the technical solutions of the present invention (for example, the part contributing to the prior art) are implemented in a form of a computer software product. The computer software product is generally stored in a computer readable storage medium and includes several instructions for instructing a computer device (which may be a personal computer, a server, or a network device, and the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A downlink control method, comprising:
determining, according to at least one downlink control condition, that a first cell is a cell under downlink control, wherein an active set of user equipment comprises at least two cells, and the first cell is in the active set of the user equipment; and
controlling the first cell to decrease a transmit power at which downlink control information is sent to the user equipment, or
controlling the first cell to stop sending the downlink control information to the user equipment.

2. The downlink control method according to claim 1, wherein the controlling the first cell to decrease a transmit power at which downlink control information is sent to the user equipment comprises:
controlling, in a first time period of each control cycle, the first cell to decrease the transmit power at which the downlink control information is sent to the user equipment, wherein duration of the first time period is less than or equal to duration of the control cycle.

3. The downlink control method according to claim 1, wherein the controlling the first cell to stop sending the downlink control information to the user equipment comprises:
controlling, in a first time period of each control cycle, the first cell to stop sending the downlink control information to the user equipment, wherein duration of the first time period is less than or equal to duration of the control cycle.

4. The downlink control method according to any one of claims 1 to 3, wherein the method further comprises:
when a first cycle is reached, determining, according to the at least one downlink control condition, that a second cell is the cell under downlink control;
controlling the second cell to decrease the transmit power at which the downlink control information is sent to the user equipment, or
controlling the second cell to stop sending the downlink control information to the user equipment; and
controlling the first cell to restore the transmit power at which the downlink control information is sent to the user equipment, or
controlling the first cell to resume sending the downlink control information to the user equipment.

5. The downlink control method according to any one of claims 1 to 4, further comprising:
if the first cell sends data to the user equipment, controlling the first cell to restore the transmit power at which the downlink control information is sent to the user equipment; or
if the first cell sends data to the user equipment, controlling the first cell to resume sending the downlink control information to the user equipment.

6. The downlink control method according to any one of claims 1 to 5, wherein the determining, according to at least one downlink control condition, that a first cell is a cell under downlink control comprises: if there is at least one cell, in the active set of the user equipment, that is not the cell under downlink control, and the first cell satisfies the following at least one downlink control condition, determining that the first cell is the cell under downlink control, wherein
the downlink control condition comprises:
an available power resource of the first cell is less than or equal to a set power threshold; or
load of the first cell is greater than or equal to a set load threshold; or
a channel signal-to-noise ratio of the user equipment in the first cell is less than or equal to a set signal-to-noise ratio threshold; or
power consumption of the first cell is greater than or equal to a set power consumption threshold; or
a quantity of user equipments in connected mode in the first cell is greater than or equal to a set user-equipment-quantity threshold; or
a priority of the user equipment in the first cell is lower than or equal to a set priority threshold; or
an average path loss of the user equipment in the first cell is greater than or equal to a set average path loss threshold; or
a downlink single-link transmit power of the user equipment in the first cell is greater than or equal to a set downlink single-link transmit power threshold.

7. A downlink control method, comprising:
receiving downlink control information that is sent by a first cell at a decreased transmit power, wherein the first cell is a cell that is determined in an active set of user equipment by a radio network controller according to a downlink control condition, and the user equipment is within coverage of the first cell.

8. The downlink control method according to claim 7, further comprising:
receiving data that is sent by the first cell at a normal transmit power, wherein the normal transmit power is a transmit power that is restored by the first cell under control of the radio network controller when the first cell needs to send the data to the user equipment.

9. A downlink control apparatus, comprising:
a determining unit, configured to determine, according to at least one downlink control condition, that a first cell is a cell under downlink control, wherein an active set of user equipment comprises at least two cells, and the first cell is in the active set of the user equipment; and
a control unit, connected to the determining unit, and configured to control the first cell to decrease a transmit power at which downlink control information is sent to the user equipment, or control the first cell to stop sending the downlink control information to the user equipment.

10. The downlink control apparatus according to claim 9, wherein the control unit is further configured to control, in a first time period of each control cycle, the first cell to decrease the transmit power at which the downlink control information is sent to the user equipment, wherein duration of the first time period is less than or equal to duration of the control cycle.

11. The downlink control apparatus according to claim 9, wherein the control unit is further configured to control, in a first time period of each control cycle, the first cell to stop sending the downlink control information to the user equipment, wherein duration of the first time period is less than or equal to duration of the control cycle.

12. The downlink control apparatus according to any one of claims 9 to 11, wherein
the determining unit is further configured to: when a first cycle is reached, determine, according to the at least one downlink control condition, that a second cell is the cell under downlink control;
the control unit is further configured to control the second cell to decrease the transmit power at which the downlink control information is sent to the user equipment, or control the second cell to stop sending the downlink control information to the user equipment; and
the control unit is further configured to control the first cell to restore the transmit power at which the downlink control information is sent to the user equipment, or control the first cell to resume sending the downlink control information to the user equipment.

13. The downlink control apparatus according to any one of claims 9 to 12, wherein the control unit is further configured to:
if the first cell sends data to the user equipment, control the first cell to restore the transmit power at which the downlink control information is sent to the user equipment; or
if the first cell sends data to the user equipment, control the first cell to resume sending the downlink control information to the user equipment.

14. The downlink control apparatus according to any one of claims 9 to 13, wherein the determining unit is further configured to: if there is at least one cell, in the active set of the user equipment, that is not the cell under downlink control, and the first cell satisfies the following at least one downlink control condition, determine that the first cell is the cell under downlink control, wherein
the downlink control condition comprises:
an available power resource of the first cell is less than or equal to a set power threshold; or
load of the first cell is greater than or equal to a set load threshold; or
a channel signal-to-noise ratio of the user equipment in the first cell is less than or equal to a set signal-to-noise ratio threshold; or
power consumption of the first cell is greater than or equal to a set power consumption threshold; or
a quantity of user equipments in connected mode in the first cell is greater than or equal to a set user-equipment-quantity threshold; or
a priority of the user equipment in the first cell is lower than or equal to a set priority threshold; or
an average path loss of the user equipment in the first cell is greater than or equal to a set average path loss threshold; or
a downlink single-link transmit power of the user equipment in the first cell is greater than or equal to a set downlink single-link transmit power threshold.

15. A downlink control apparatus, comprising:
a receiving unit, configured to receive downlink control information that is sent by a first cell at a decreased transmit power, wherein the first cell is a cell that is determined in an active set of the apparatus by a radio network controller according to a downlink control condition, and the apparatus is within coverage of the first cell.

16. The downlink control apparatus according to claim 15, wherein the receiving unit is further configured to receive data that is sent by the first cell at a normal transmit power, wherein the normal transmit power is a transmit power that is restored by the first cell under control of the radio network controller when the first cell needs to send the data to the apparatus.
